# EUROPEAN PATENT APPLICATION

(11) **EP 1 170 329 A1**
(43) Date of publication of application: **09.01.2002**
(21) Application number: 01202534.2
(22) Date of filing: 02.07.2001
(51) Int. Cl.: C08K 5/32, C08K 5/52, C08K 5/53, C08K 5/15, C08K 5/3435, C08L 23/10, C08K 5/00

(54) **Polymeric composition, its use for the manufacture of object and object so obtained**

(30) Priority: 05.07.2000 US 610584
(71) Applicant: SOLVAY POLYOLEFINS EUROPE - BELGIUM (Société Anonyme), 1050 Bruxelles (BE)
(72) Inventor: Spino, Larry, Houston, Texas 77095 (US); Swanzy, Scott, Houston, Texas 77083 (US)
(74) Representative: Destryker, Elise Martine

(57) **Abstract**

A stabilized polypropylene composition, free or essentially free of any phenolic antioxidant containing:
a) 100 parts by weight of a propylene polymer,
b) from 0.005 to 0.1 part by weight of an amine oxide having the structural formula 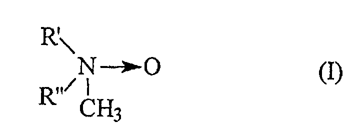 wherein R' and R" are groups containing from 1 to 36 carbon atoms, or of a N,N-dialkylhydroxylamine of formula

   R¹ R² NOH (II)

   wherein
   R¹ and R² are independent groups of 1 to 36 carbon atoms,
c) from 0.1 to 0.5 part by weight of a clarifying agent, and optionally
d) from 0.01 to 0.1 part by weight of a sterically hindered amine.

Manufacture of shaped object by using said composition and manufactured objects so obtained.

## Description

This invention relates to a composition based on propylene polymer containing a specific antioxidant and a specific clarifying. It also relates to the manufacture of objects by using said composition and to the objects so manufactured.

The use of trialkyl amine oxides and hydroxylamines as stabilizer of polymeric compositions such as polypropylene compositions is known for example from WO 94/24344 and WO 97/11993.

The compositions containing amine oxide exhibit good melt flow rate stability and those containing N,N dialkylhydroxylamines are effective in providing processing, long-term heat aging and light stability performances, specially gas fade resistance. According to those documents the compositions could contain various conventional additives such as calcium stearate, sterically-hindered amines or phosphite.

However such compositions remain of poor appearance namely in terms of black specks arising during their processing and have poor optical properties in terms of transparency, clarity and gloss, and poor YI color exacerbated by organic peroxide cracking.

The invention overcomes these disadvantages by providing a new composition based on propylene polymer containing a specific antioxidant and a specific clarifying and optionally a sterically hindered amine which has in the same time excellent optical properties and appearance, good processing behavior and excellent mechanical properties.

To this end, the invention relates to a composition, free or essentially free, of phenolic antioxidant, containing
a) 100 parts by weight of a propylene polymer,
b) from 0.05 to 0.1 part by weight of an amine oxide having the structural formula 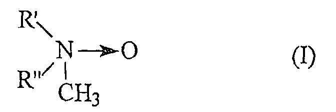 wherein R' and R" are groups containing from 1 to 36 carbon atoms, or of a N,N-dialkylhydroxylamine of formula

   R¹ R² NOH (II)

   wherein
   R¹ and R² are independent groups of 1 to 36 carbon atoms,
c) from 0.05 to 0.5 part by weight of a clarifying agent.

The composition according to the invention is free, or essentially free, of any phenolic antioxidants. In the context of the invention, the phrase "free or essentially free, of phenolic antioxidant" means that no phenolic antioxidant is deliberately added to the instant composition in order to achieve the stabilization. Accordingly, the amount of phenolic antioxidant is less than 0.01, generally less than 0.005 parts per 100 parts of propylene polymer.

For the purpose of the present invention, propylene polymer is intended to denote propylene homopolymers and propylene copolymers containing at least 50, preferably at least 75 % by weight of units derived from propylene. The propylene copolymers may be chosen from random copolymers and block copolymers containing at least two blocks of different chemical composition, which are well known to a person skilled in the art.

The copolymer may contain a single comonomer or a number of different comonomers. The comonomers are most often chosen from α-olefins containing up to 12 carbon atoms. Diolefins containing up to 14 carbon atoms can also be suitable. The comonomers are preferably chosen from ethylene, 1-butene, 1-hexene and 4-methyl-1-pentene. Amongst the propylene polymers, preference is given to random copolymers containing from 0.05 to 20 % by weight of comonomers because of improved impact and optical properties. Propylene copolymers that have produced the most advantageous results are the random copolymers containing 0.1 to 5 % by weight of ethylene. The comonomer content is measured by infrared spectroscopy and the ethylene content is specifically estimated from the band measured at 732 cm⁻¹. The propylene polymers generally have a melt index, measured at 230°C under a 2.16 kg load according to ASTM D 1238 (1986), of 0.1 to 100 g/10 min, in particular from 0.2 to 50, values from 1 to 10 g/10 min being the most common ones. The propylene polymers involved in the composition according to the invention may be obtained by any known polymerization process, such as polymerization in gas phase, in suspension or in solution, in the presence of any type of catalyst capable of polymerizing propylene optionally in the presence of one or more comonomers, such as, for example, catalysts based on TiCl₃, catalysts based on TiCl₄ supported on magnesium dichloride and metallocene catalysts. These catalysts and the description thereof are well known to the man of ordinary skill in the art. The composition according to the invention that provides the best results are those using a propylene polymer obtained from TiCl₃ catalysts. Such TiCl₃ catalysts are preferably complexed TiCl₃ of crystalline form δ obtained by subjecting the solid resulting from the reduction of titanium tetrachloride or titanium tetraalkoxide by an organoaluminium reducing agent to successive or combined treatments by an electron-donor compound and by a halogenated compound. Such catalysts have been described for example in US-A-5 204 305, US-A-4 210 729 and US-A-5 780 379.

The polymers obtained with TiCl₃ catalysts are characterized most often by a content of inorganic residues, generally called ash content, of from 100 mg to 700 mg of inorganic residue per kg of propylene polymer. Generally the ash content is at most 500 mg per kg of propylene polymer. Moreover the preferred compositions according to the invention are based on a propylene polymer whose initial yellowness index is of at least -10, typically at least -15. Values of at most -5 give suitable results.

The composition of the invention further contains an amine oxide of formula (I) or a N,N-dialkylhydroxylamine of formula (II) as described hereabove, these compounds being collectively called antioxidizing agent in the run of the present description. Particularly satisfactory results are obtained with a content of antioxidizing agent of at least 0.01, more preferably 0.05 part per 100 parts of propylene polymer. Good results are observed when said content is of at most 0.08 part per 100 parts of propylene polymer.

The amine oxide is preferably chosen from the compounds of formula (I) wherein R' and R" are saturated hydrocarbon group containing 1 to 36 carbon atoms. More preferably they are linear or substituted-alkyl groups containing 4 to 22 carbon atoms. The N,N-dialkylhydroxylamine is most often such that R¹ and R² are alkyl groups containing 1 to 36 carbon atoms, cycloalkyl group containing 5 to 12 carbon atoms or aralkyl group of 7 to 15 carbon atoms that may be substituted. N,N-dialkylhydroxylamines giving the best results are substituted by alkyl radicals contain from 14 to 22 carbon atoms.

Compositions containing amine oxide are preferred for handling, toxocology, polymer stability and polymer performance improvements. Di-alkyl amine oxides manufactured from vegetable sources are suitable for Kosher applications.

Composition containing N,N-dialkylhydroxylamines are preferred for ease of handling and blending with other antioxidants. Amine oxide and N,N-dialkylhydroxyl amines are both advantageously used with depolymerized PP homopolymers and copolymers.

The composition according to the invention further contains 0.05 to 0.5 part per 100 parts of propylene polymer of a clarifying agent. According to the present description clarifying is intended to denote high-performance nucleating agents known for their action on the transparency of the propylene polymers. Preferred examples of such compounds are benzilidene-sorbitol compounds, metallic salt of organic phosphate or metal salts of rosin. Examples of benzilidene-sorbitol compounds are bis methyl-, ethyl- isopropyl- or isobutyl-dibenzylidene sorbitol, bis (3,4-dimethylbenzilidene) sorbitol, bis (2,4-dimethylbenzilidene) sorbitol, bis (2,5-dimethylbenzilidene) sorbitol. From these compounds bis (3,4-dimethylbenzilidene) sorbitol gives the best results. Examples of metallic salt of organic phosphate are sodium and aluminum salt of bis(2,4-di-tertbutylphenyl) phosphate, of ethylidene bis(2,4-di-tertbutylphenyl)phosphate or of methylene bis(4,6-di-tertbutylphenyl)phosphate or the corresponding di-butylphenyl derivatives. The tert-butyl compounds are preferred and from them sodium 2,2'-methylene-bis- (4,6-ditertbutylphenyl)phosphate and aluminium hydroxy-bis(2,2'-methylene-bis[4,6-di(tertbutyl)phenyl]phosphate is particularly preferred. Examples of rosin compounds are magnesium salts of rosin acids (acid derivatives of substituted octahydrophenanthrene).

The composition according to the invention that gives the best results contains a metallic salt of organic phosphate as clarifying agent.

Besides the propylene polymer, the antioxidizing agent and the clarifying agent, the composition according to the invention may optionally comprise from 0.01 to 0.1 part by weight of a sterically hindered amine per 100 parts or propylene polymer. Examples of these compounds known for their UV-stabilizing effects are bis (2,2,6,6-tetramethylpiperidyl)sebacate, bis-5 (1,2,2,6,6-pentamethylpiperidyl)-sebacate, n-butyl-3,5-di-tert-butyl-4-hydroxybenzyl malonic acid bis(1,2,2,6,6-pentamethylpiperidyl)ester, condensation product of 1-hydroxyethyl-2,2,6,6-tetramethyl-4-hydroxy-piperidine and succinique acid, condensation product of N,N'-(2,2,6,6-tetramethylpiperidyl)-hexamethylenediamine and 4-tert-octylamino-2,6-dichloro-1,3,5-s-triazine, tris-(2,2,6,6-tetramethylpiperidyl)-nitrilotriacetate, tetrakis-(2,2,6,6-tetramethyl-4-piperidyl)-1,2,3,4-butane-tetra-carbonic acid, 1,1 '(1,2-ethanediyl)-bis-(3,3,5,5-tetramethylpiperazinone). These amines, typically called HALS (Hindered Amines Light Stabilizing), include butane tetracarboxylic acid 2,2,6,6-tetramethyl piperidinol esters. Such amines further include hydroxylamines derived from hindered amine, such as di(1-hydroxy-2,2,6,6-tetramethylpiperidin-4-yl)sebacate 1-hydroxy 2,2,6,6-tetramethyl-4-benzoxypiperidine, 1-hydroxy2,2,6,6-tetramethyl-4-(3,5-di-tert-butyl-4-hydroxy hydrocinnamoyloxy)-piperidine and N(1-hydroxy-2,2,6,6-tetramethyl-piperidin-4-yl)epsiloncaprolactam. Other typical examples of sterically hindered amines are 1,3,5-triazine-2,4,6-triamine, N,N"'-[1,2-ethanediylbis [[[4,6-bis[butyl(1,2,2,6,6-pentamethyl-4-piperidinyl)amino]-1,3,5-triazine-2-yl]imino] -3,1-propanediyl]]-bis[N',N"-dibutyl-N',N"-bis(1,2,2,6,6-pentamethyl-4-piperidinyl); 1,6-hexanediamine, N, N'-bis(2,2,6,6-tetramethyl-4-piperidinyl)-polymer with 2,4,6-trichloro-1,3,5-triazine, reaction products with with N-butyl-1-butanamine and N-butyl-2,2,6,6-tetramethyl-4-piperidinamine; poly [(6-morpholino-s-triazine-2,4-diyl) [2,2,6,6-tetramethyl-4-piperidyl) imino]-hexamethylene [(2,2,6,6-tetramethyl-4-piperidyl) imino].

For the purpose of the present invention, sterically-hindered amine further include blends containing one or more sterically hindered amines.

The content of the optionally sterically-hindered amine is generally at least 0.02 part per 100 parts of propylene polymer. Contents of at least 0.05 are preferred. The best results are obtained when said content is at most 0.07 parts per 100 parts of propylene polymer.

The composition according to the invention that gives the best results contains :
a) 100 parts by weight of a propylene copolymer containing 0.1 to 5 weight % of ethylene,
b) from 0.01 to 0.1 part by weight of an amine oxide of formula (I) wherein R' and R' are alkyl radicals containing 4 to 22 carbon atoms, and
c) from 0.1 to 0.5 part by weight of a metallic salt of organic phosphate.

It goes without saying that the composition according to the invention may contain one or more propylene polymer, one or more oxidizing agent, one or more clarifying agents or one or more sterically-hindered amine.

The composition according to the invention may also contain other additives such as for example supplemental stabilizer, organic or inorganic colorant. The content of these additional additives is generally less than 10, preferably less than 1 part per 100 parts of propylene polymer.

The composition according to the invention may be obtained by any suitable known means, for example by mixing the propylene polymer, the antioxidizing agent, the clarifying and the optional sterically-hindered amine at ambient temperature, followed by mixing at a temperature above the melting temperature of the polymer, for example in a mechanical mixer or in an extruder. An alternative method consists in introducing one or more of the above mentioned additives into the polymer which is already molten.

The procedure is preferably carried out in two successive stages, the first consisting in mixing the propylene polymer and the above mentioned additives at ambient temperature, the second step consisting in continuing mixing in the melt in an extruder. The temperature of the second stages is generally from 100 to 300 °C, in particular from 120 to 250 °C. Temperature of from approximately 130 to 210 °C being the most used.

The additive formulation of the composition of the invention is particularly suitable when the propylene polymer needs to be depolymerized. The depolymerization of the propylene polymers is usually carried out by melt blending in the presence of a compound capable of generating free radicals. The compound capable of generating free radicals is in the most cases chosen from organic peroxides, persulphates and diazo compounds. Peroxides are generally preferred. The amount of said compounds is in most cases from 0.01 to 0.1 parts by weight per 100 parts by weight of propylene polymer.

The depolymerization of the propylene polymer may be carried out in a separated step preceding or following the preparation of the composition of the invention. It is however generally preferred to introduce the compound capable of generating free radicals as an additive for the preparation of the composition according to the invention.

The composition according to the invention offers the advantages of a low initial yellowness index and good antioxidant stabilization. Moreover it does not show blacks specks after processing and had good YI color after normal processing temperatures. It is particularly noted that the composition according to the invention maintains good YI color when the propylene polymer is depolymerized with organic peroxides.

The composition according to the invention is capable of being processed by any of the conventional processes for manufacturing shaped objects of propylene polymer and more particularly by extrusion, blow extrusion, extrusion-thermoforming and injection molding. It is suitable for the manufacture of shaped objects such as foil, sheets, containers, bags, sachets or tubes. It is particularly suitable for injection molding because it provides superior color performance especially in nucleated controlled-rheology PP homopolymers and copolymers. Due to its good compromise properties/costs it is advantageously used for making insulation tape, sharps containers, pen banels, cups and toys.

Consequently, the present invention also relates to the manufacture of objects by using the composition according to the invention and to the objects so manufactured, in particular housewares, caps and closures, disposable medical wares, containers, that is, general consumer products made with PP homopolymers or copolymers. They exhibit good optical and transparency properties.

The examples whose description follows serve to illustrate the invention.

The meaning of the symbols employed in these examples, the units expressing the quantities mentioned and the methods of measurement of these quantities are detailed below.
- MFI =: melt index of the polymer, measured at 230 °C under a 2.16 kg load according to ASTM Standard D 1238 (1986).
- [Et] =: ethylene content of the propylene copolymer measured by infrared spectrography (spectroscopy) and estimated from the band measured at 732 cm⁻¹
- [Ash] =: content of inorganic residues (ash content) measured by decomposing 20 to 100 grams of resin by heating in a constant weight crucible.
- YIₛₜ =: Yellowness index measured according to ASTM Standard D 1925 (1988) at 190 °C with a tristimulus colorimeter commercialized by Hunter Labs.
- YI₃₀₀ =: Yellowness index measured according to ASTM Standard D 1925 (1988) at 300 °C with a tristimulus colorimeter commercialized by Hunter Labs.
- Haze =: Degree of transparency measured on 0.050 inch or 0.075 inch plaques with a XL211 Hazegard System commercialized by BYK Gardner .
100 parts by weight of a propylene polymer are dry blended with the following additive and melt blended at 190 to 205 °C in an extruder to obtain compositions according to the invention. The propylene polymer was obtained by polymerization in liquid propylene at 58°C and with an overall flake average residence time of 3 hours in the presence of a TiCl₃ catalyst as described in example 1 of US-A-5 204 305. The dialkyl amine oxides used in the composition are commercialized under the trademark GENOX® EP by General Electric.

The clarifying agent is an aluminium hydroxy-bis (2,2'-methylene-bis [4,6-di(tertbutyl)phenyl] phosphate commercialized under the name of ADK NA-21 by Amfine Chemical Corporation.

The characteristics of the propylene polymers, the amounts of additives and the properties of the obtained compositions are given in Table 1 hereunder.

**Table 1**

| examples | 1 | 2 |
|---|---|---|
| Propylene polymer | | |
| MFI (g/10 min) starting | | |
| flake | 10 | 10 |
| [Et] (% weight) | 2.1 | 2.1 |
| [Ash] (% weight) | 150 | 150 |

| Additives | | |
|---|---|---|
| Dialkyl amine oxide (part | | |
| by weight) | 0.05 | 0.05 |
| Glycerol monostearate | | |
| (part by weight) | 0.1 | 0.40 |
| Calcium stearate | | |
| (part by weight) | 0.05 | 0.05 |
| Bis(2,4-di-tert-butyl | | |
| phenyl pentaerythritol- | 0.05 | 0.05 |
| diphosphite | | |
| NA-21 | 0.20 | 0.15 |

| Composition properties | | |
|---|---|---|
| Haze | 12 | 15 |
| YIₛₜ | -8 | -9 |
| YI₃₀₀ | -5 | -6 |
| MFI (g/10 min) | 30 | 30 |

## Claims

1. A composition, free or essentially free of phenolic antioxidant, containing
a) 100 parts by weight of a propylene polymer,
b) from 0.005 to 0.1 part by weight of an amine oxide having the structural formula 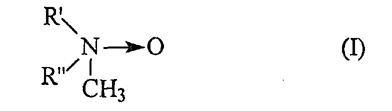 wherein R' and R" are groups containing from 1 to 36 carbon atoms, or of a N,N-dialkylhydroxylamine of formula
R¹R² NOH (II)
wherein
R¹ and R² are independent groups of 1 to 36 carbon atoms,
c) from 0.1 to 0.5 part by weight of a clarifying agent.

2. Composition according to claim 1, wherein the propylene polymer is a random copolymer containing 0.1 to 5 % by weight of ethylene.

3. Composition according to claim 1, wherein the propylene polymer contains from 100 mg to 500 mg of inorganic residue per kg of propylene polymer.

4. Composition according to claim 1, containing from 0.005 to 0.1 part by weight of an amine oxide of formula (I) wherein R' and R" are linear or substituted alkyl groups containing 4 to 22 carbon atoms.

5. Composition according to claim 1, containing from 0.005 to 0.1 part of a N,N-dialkylhydroxylamine of formula (II) wherein R¹ and R² contain from 14 to 22 carbon atoms.

6. Composition according to claim 1, wherein the clarifying agent is chosen from benzilidene sorbitol compounds, metallic salt of organic phosphate or metal salts of rosin.

7. Composition according to claim 6, wherein the clarifying agent is the aluminium hydroxy-bis(2,2'-methylene-bis[4,6-di(tert-butyl)phenyl]phosphate.

8. Composition according to claim 1, containing further from 0.01 to 0.1 part by weight of a sterically hindered amine.

9. Composition according to claim 1 containing :
a) 100 parts by weight of a propylene copolymer containing 0.1 to 5 weight % of ethylene,
b) from 0.01 to 0.1 part by weight of an amine oxide of formula (I) wherein R' and R' are alkyl radicals containing 4 to 22 carbon atoms, and
c) from 0.1 to 0.5 parts by weight of a metallic salt of organic phosphate.

10. Manufacture of shaped objects by using the composition according to claim 1.

11. Object manufactured from the composition according to claim 1.
